# EUROPEAN PATENT SPECIFICATION

(11) **EP 2 058 569 B1**
(45) Date of publication and mention of the grant of the patent: **19.10.2011**
(21) Application number: 07425839.3
(22) Date of filing: 31.12.2007
(51) Int. Cl.: F16K 31/56, F16K 17/36

(54) **Shut-off unit for a fluid, such as gas, with double trigger**
Schließeinheit für eine Flüssigkeit, wie z.B. Gas, mit doppeltem Auslöser
Unité de coupure pour un fluide, tel un gaz, à double déclencheur

(30) Priority: 08.11.2007 IT BS20070172
(43) Date of publication of application: 13.05.2009
(73) Proprietor: Pietro Fiorentini S.p.A., 36057 Arcugnano (VI) (IT)
(72) Inventor: Ravazzolo, Romano, 25128 Brescia (IT)
(74) Representative: Pulieri, Gianluca Antonio

(56) References cited:
- DE-A1- 19 952 610
- US-A1- 2003 079 774

## Description

The present invention relates to a shut-off unit with double trigger, that is a shut-off unit able to intervene to prevent the transit of a fluid in a distribution line following occurrence of a terrestrial movement, on the basis of independent triggering circumstances.

In the sector of safety devices for seismic risk, inertially-activated shut-off devices which are subsequently reset manually are known of, which shut off the distribution line they are mounted on when a terrestrial movement exceeds the intensity of a predefined, minimum threshold. One solution known of, for example is that referred to in the Italian patent application for invention BS2006A000099 or BS2006A000103, both in the name of the Applicant.

Remotely-controlled, shut-off devices with manual reset are also known of, in other words such as to be remotely activated by a sensor connected to an accelerometer. One solution is known of from the Italian patent application for the Utility Model MI2006U000217, also in the name of the Applicant.

Pressure switch operated shut-off devices are also known of, such as to cut in when the value of the pressure in the line is below a minimum threshold (or above a maximum threshold). An example is shown in the Italian invention patent IT 1303464, (corresponding to DE-A-199 52 610) in the Applicant's name.

However an increasing need is felt to ensure the intervention of a shut-off device in the event of a telluric event occurring, whilst preventing false alarms. Such false alarms are often due to the device being overly sensitive and interrupting the transit of fluid even when a telluric situation has not arisen.

The purpose of the present invention is to produce a shut-off group for a fluid, especially for anti-seismic use, with particularly well-developed safety and reliability **characteristics, in that** the actuation of such occurs on the basis of the occurrence of various and different external circumstances.

Such purpose is achieved by a shut-off unit produced according to claim 1 below. The claims dependent on this describe embodiment variations.

The characteristics and advantages of the shut-off unit according to the present invention will be evident from the description given below, by way of example and not limited to such, according to the attached figures, wherein:

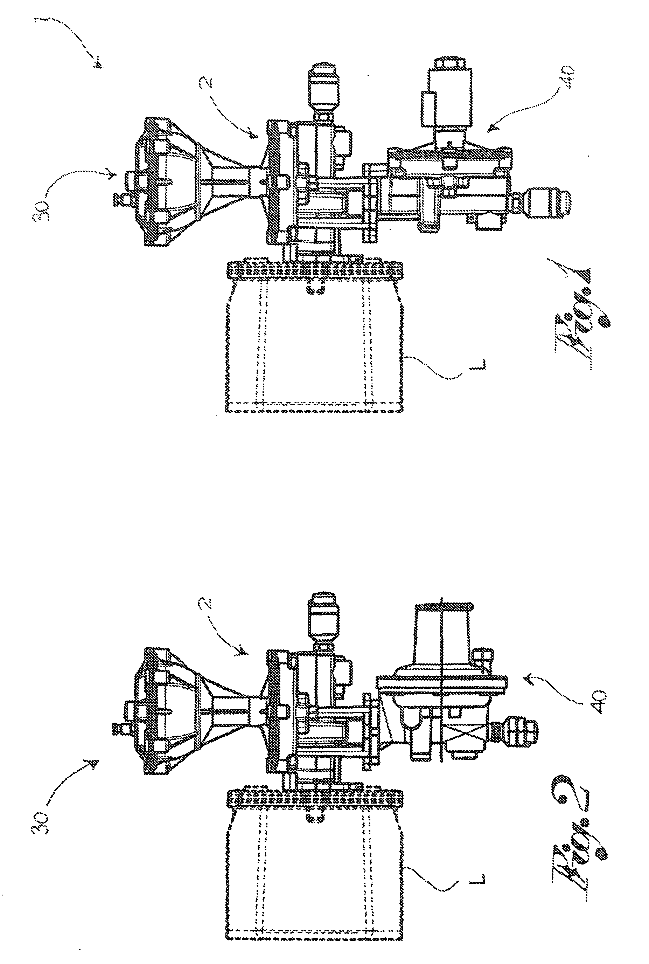

- figure 1 shows a shut-off unit comprising an inertial trigger device and a remote control trigger device;

- figure 2 shows a shut-off unit comprising an inertial trigger device and a pressure-switch trigger device;

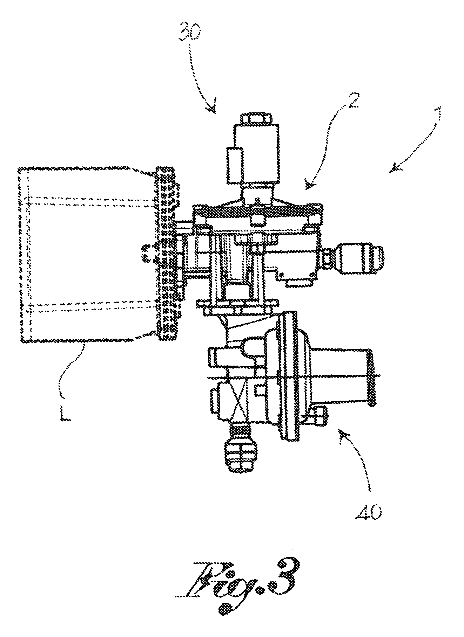

- figure 3 shows a shut-off unit comprising a remote-control trigger device and a pressure-switch trigger device;

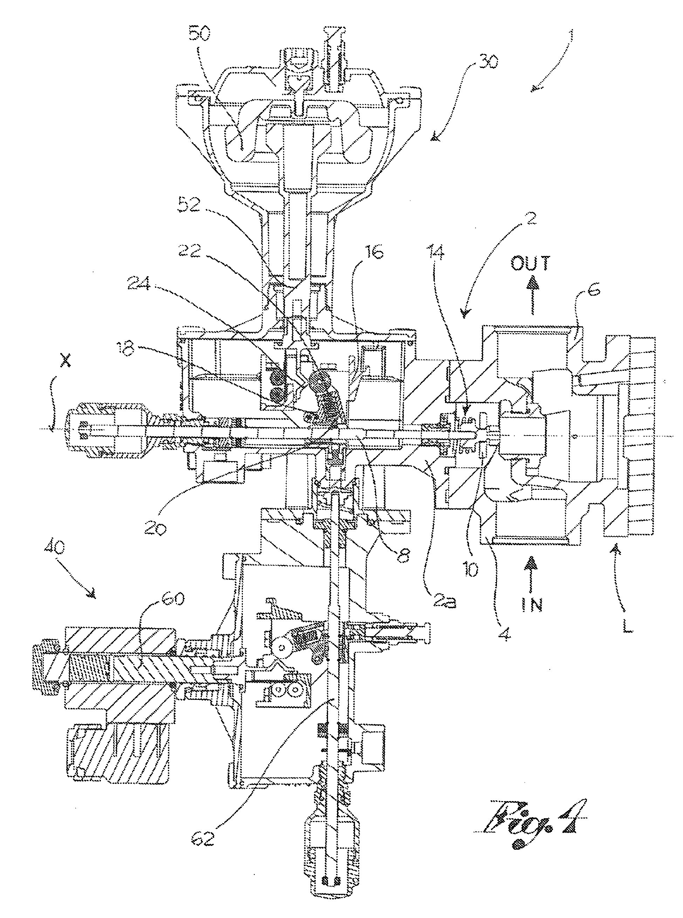

- figure 4 shows a cross-section of the shut-off unit of figure 1, comprising an inertial trigger device and a remote-control trigger device; and

- figure 5 shows a cross-section of the shut-off unit of figure 3, comprising a remote-control trigger device and a pressure-switch trigger device.

With reference to the attached figures, reference numeral 1 globally denotes a shut-off unit according to the present invention.

Unit 1 comprises an obturator device able to move from an open configuration in which the transit of fluid from the input pipe to the output pipe is allowed, to a closed configuration in which said transit is impeded.

The obturator device comprises a main body 2a, able to be joined to the input pipe 4 and the output pipe 6 of a distribution line L of a fluid, for example of gas.

The obturator device also comprises a shaft 8 extending mainly along a shaft axis X, supported in a translatable manner inside the main body. Specifically, the shaft can be translated from a closed position, in which the obturator device is in the closed configuration, to an open position, in which the obturator device is in the open configuration.

The obturator device comprises, in addition, an obturator 10, for example discoid and fitted with seals, positioned at the head of the shaft, so as to close off the fluidic communication between the input pipe and the output pipe when the device is in the closed configuration.

Furthermore, the obturator device comprises activators able to act on the shaft 8 so as to move it from the open position to the closed position; for example, the activators comprise an elastic element 14, placed in compression between the shaft 8 and the main body 2a to push the shaft from the open position to the closed position.

In addition, the obturator device comprises means of retention able to keep the shaft 8 in the open position, in contrast with said activators.

Preferably, the means of retention comprise a supporting body 16, moving in translation, and a lever 18, hinged to the supporting body 16, suitable for rotation from an engaged position, in which it is engaged with the shaft 8 so as to retain it, to a release position, in which it does not retain the shaft 8.

The means of retention comprise, moreover, a pin 20, mobile in translation in the lever 18, directly engaged on the shaft 8 in the engaged position of the lever, and a spring 22, compressed between the pin 20 and the lever 18, able to constantly influence the lever to move it from the engaged position to the release position.

In addition, the means of retention comprise a cam element 24, able to pass from an engaged position, in which it influences the lever keeping it in its engaged position, to a release position, in which it does not retain the lever, thus free to pass to the release position.

The shut-off unit also comprises a first trigger device 30, able to act on said obturator device, to move it from the open configuration to the closed configuration. The first trigger device is chosen from the group comprising inertial, remote-control, and pressure switch devices.

In addition, the shut-off unit comprises a second trigger device 40, able to act on said obturator device, to move it from the open configuration to the closed configuration. The second trigger device, different from the first, is also chosen from the group comprising inertial, remote-control, and pressure switch devices.

The first and second trigger devices are both mounted on the main body 2a of the obturator device and, specifically, are able to co-operate with the shaft 8 to enable the obturator device to pass from the open to the closed configuration.

Specifically, the first trigger device 30 can engage with the lever 18 of the means of retention and the second trigger device 40 can engage with the supporting body 16, to disactivate the means of retention.

In addition, the first trigger device 30 is joined to the cam element 24.

According to a preferred form of embodiment, the inertial trigger device comprises a rocker arm 50 able to oscillate and a first trigger shaft 52, able to be t influenced by the oscillating rocker arm and engaged with the obturator device to keep it in the open configuration, as well as to disengage from it by means of the rocker arm.

For example the first trigger shaft 52 is joined to the cam element 24, positioned at the head of it.

According to a further example, the first trigger shaft can engage with the supporting body 16 of the means of retention so as to disactivate it.

According to a further form of embodiment, the remotely-controlled trigger device comprises an actuator 60 which moves on receipt of an electric or radio signal and a second trigger shaft 62, which may be influenced by the actuator, engaged with the obturator device to keep it in the open position.

For example, the second trigger shaft 62 may be engaged with the means of retention, for example, to the supporting body 16 of it, so as to disactivate it and allow the movement of the shaft 8 to the closed position.

According to a further example (not shown), the second trigger shaft 62 is joined to the cam element 24.

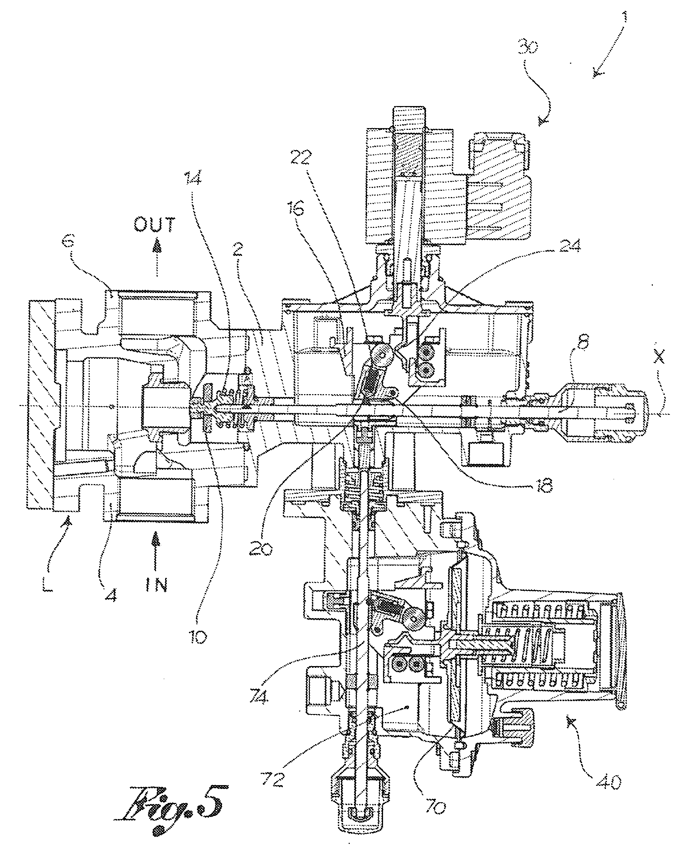

According to yet a further form of embodiment (figure 5), the pressure-switch trigger device comprises a flexible membrane 70 which defines a pressure chamber 72 inside the body of the device in fluidic communication with the distribution line L so as to be sensitive to the pressure of the fluid, and a third trigger shaft 74, engaged with the obturator device to keep it in the open configuration. For example the third trigger shaft 74 can engage with the means of retention, for example with the supporting body 16 of it, to disactivate it.

According to a further example of embodiment (not shown), the third trigger shaft 74 is joined to the cam element 24 situated at the head of the same.

During normal functioning of a shut-off unit comprising an inertial trigger device and a remotely-controlled trigger device, the shaft is disengaged from the means of retention and shuts off the transit of fluid both when the entity of the oscillations is such as to activate the inertial device, and when such tremors are detected by an accelerometer, connected to the actuator.

During normal functioning of a shut-off unit comprising an inertial trigger device and a pressure switch trigger device, the shaft is disengaged and shuts off the transit of fluid both when the entity of the oscillations is such as to activate the inertial device, and when an excessive reduction or excessive increase in the pressure of the fluid occurs, for example as a result of damage to the distribution line.

During normal functioning of a shut-off unit comprising a remotely-controlled trigger device and a pressure-switch trigger device, the shaft is disengaged and shuts off the transit of fluid both when the entity of the oscillations is detected by an accelerometer connected to the actuator, and when an excessive reduction or excessive increase in the pressure of the fluid occurs, for example as a result of damage to the distribution line.

lnnovatively, the shut-off unit according to the present invention is extremely reliable, in that the shutting-off of the line follows the occurrence of causes independent of each other.

It is clear that a technician skilled in this sector may make modifications to the functional unit described above so as to satisfy contingent and specific requirements, all moreover contained within the scope of protection as defined by the following claims.

## Claims

1. Shut-off unit (1) which can be joined to an input pipe (4) and an output pipe (6) of a distribution line of a fluid, comprising:
an obturator device (2) able to pass from an open configuration, in which the transit of fluid from the input pipe to the output pipe is allowed, to a closed configuration, in which said transit is impeded: comprising activators able to act said closed configuration and means of retention able to retain said open configuration;
- a first trigger device (30) able to act on said obturator device to change it from the open configuration to the closed configuration, said first trigger device being chosen from a group comprising inertial-activated, remotely-controlled by a sensor connected to an accelerometer, and pressure-switch operated devices;
- a second trigger device (40) able to act on said obturator device to change it from the open configuration to the closed configuration, said second trigger device, different from the first device, being chosen from the group comprising inertial-activated, remotely-controlled by a sensor connected to an accelerometer, and pressure-switchoperated devices;
wherein said means of retention comprise
- a supporting body (16);
- a lever (18); and
wherein the first trigger device can engage with the lever (18) and the second trigger device can engage with the supporting body (16), to deactivate the means of retention.

2. Unit according to claim 1, wherein the obturator device comprises a main body (2a), said first and second trigger devices being mounted on said body.

3. Unit according to claim 2, wherein
- the obturator device comprises a shaft (8) able to translate from a closed position, in which the obturator device is in the closed configuration, to an open position, wherein the obturator device is in the open configuration; and
- the first and second trigger devices are able to co-operate with said shaft so as to allow the passage from the open to the closed configuration.

4. Unit according to claim 3, comprising
- said activators able to act on the shaft to move it from the open position to the closed position;
- said means of retention which are able to keep the shaft in the open position, in contrast with said activators;
wherein the first and second trigger devices are able to co-operate with said means of retention.

5. Unit according to claim 4, wherein the activators comprise an elastic element (14).

6. Unit according to claims 4 or 5, wherein the means of retention comprise
- the supporting body (16), mobile in translation;
- the lever (18), hinged to the supporting body, able to be rotated from an engaged position, in which it is engaged with the shaft so as to retain it, to a release position, in which it does not retain the shaft.

7. Unit according to claim 6, wherein the means cf retention comprise, in addition:
- a pin (20), mobile in translation in the lever, directly engaged to the shaft in the engaged position of the lever;
- a spring (22), compressed between the pin and the lever, able to constantly influence the lever so as to move it from the engaged to the release position;
- a cam element (24), able to move from an engaged position, in which it influences the lever by holding it in the engaged position, to a release position, in which it does not hold the lever, thus free to move to the release position;
wherein the first trigger device is joined to the cam element.

8. Unit according to any of the previous claims, wherein the inertial trigger device comprises:
- a rocker arm (50) able to oscillate;
- a first trigger shaft (52), able to be influenced by the oscillating rocker arm, engaged with the obturator device to keep it in the open configuration and which may be disengaged from it by the action of the rocker arm.

9. Unit according to any of the previous claims, wherein the remotely-controlled trigger device comprises:
- an actuator (60) moving on receipt of an electric or radio signal;
- a second trigger shaft (62), which can be influenced by the actuator, engaged with the obturator device so as to keep it in the open configuration.

10. Unit according to any of the previous claims, wherein the pressure-switch trigger device comprises
- a flexible membrane (70) defining a pressure chamber (72) inside the body, in fluidic communication with the input and output pipes;
- a third trigger shaft (74), joined to the membrane, engaged with the obturator device to keep it in the open configuration.

## Patentansprüche

1. Schließeinheit (1), die mit einer Einlassleitung (4) und einer Auslassleitung (6) eines Verteilnetzes für ein Fluid verbunden werden kann, umfassend
- eine Sperrvorrichtung (2), die von einer Offenstellung, in der der Durch-gang des Fluids von der Einlassleitung zu der Auslassleitung ermöglicht ist, in eine Schließstellung, in der der Durchgang verhindert ist, bewegbar ist, umfassend Aktivierungsmittel, die die Schließstellung aktivieren, und Festsetzmittel, die die Offenstellung aufrechterhalten,
- eine erste Auslösevorrichtung (30), die auf die Sperrvorrichtung einwirkt, um sie aus der Offenstellung in die Schließstellung zu bewegen, wobei die erste Auslösevorrichtung aus einer Gruppe von Vorrichtungen ausgewählt ist, die durch Trägheit aktiviert werden, solche, die durch einen Sensor, der mit einem Beschleunigungsmesser verbunden ist, ferngesteuert werden und solche, die durch einen Druckschalter betätigt werden,
- eine zweite Auslösevorrichtung (40), die im Stande ist, auf die Sperrvorrich-tung einzuwirken, um diese von der Offenstellung in die Schließstellung zu überführen, wobei als zweite Auslösevorrichtung eine andere als die erste Vorrichtung gewählt wird, aber auch aus der Gruppe ausgewählt ist, die Vor-richtungen umfasst, die durch Trägheit aktiviert werden, solche, die durch ei-nen Sensor, der mit einem Beschleunigungsmesser verbunden ist, fernge-steuert werden und solche, die durch einen Druckschalter betätigt werden,
wobei die Festsetzmittel folgendes umfassen:
- einen Stützkörper (16),
- einen Hebel (18), und
wobei die erste Auslösevorrichtung mit dem Hebel (18) in Eingriff ist und wo-bei die zweite Auslösevorrichtung mit dem Stützkörper (16) in Eingriff ist, um die Festsetzmittel zu deaktivieren.

2. Einheit gemäß Anspruch 1, wobei die Sperrvorrichtung einen Hauptkörper (2a) umfasst und die erste und die zweite Auslösevorrichtung an dem Körper montiert ist.

3. Einheit gemäß Anspruch 2, wobei
- die Sperrvorrichtung eine Welle (8) umfasst, die aus einer geschlosse-nen Position, **in der** die Sperrvorrichtung sich in der Schließstellung befindet, in eine Offenstellung bewegbar ist, wobei die Sperrvorrichtung sich in der Offenstellung befindet, und
- die erste und die zweite Auslösevorrichtung derart mit der Welle zu-sammenwirken, dass die Bewegung aus der Offenstellung in die Sperrstellung ermöglicht ist.

4. Einheit gemäß Anspruch 3 umfassend
- die Aktivierungsmittel, die im Stande sind, so auf die Welle einzuwirken, dass diese sich aus der Offenstellung in die Schließstellung bewegt,
- die Festsetzmittel, die im Stande sind, die Welle zu der Offenstellung im Gegensatz zu den Aktivierungsmitteln festzusetzen,
wobei die erste und die zweite Auslösevorrichtung im Stande sind, mit den Festsetzmitteln zusammenzuwirken.

5. Einheit gemäß Anspruch 4, wobei die Aktivierungsmittel ein elastisches Ele-ment (14) umfassen.

6. Einheit gemäß Anspruch 4 oder 5, wobei die Festsetzmittel folgendes umfas-sen
- den Stützkörper (16), der eine Translationsbewegung ausführen kann,
- den Hebel (18), der an dem Stützkörper gelenkig befestigt ist und aus einer Eingriffsposition, in der er mit der Welle derart in Eingriff ist, dass er sie festsetzt, in eine Löseposition, in der er die Welle nicht festsetzt, drehend bewegbar ist.

7. Einheit gemäß Anspruch 6, wobei die Festsetztmitttel ferner umfassen
- einen Stift (20), der eine Translationsbewegung in dem Hebel ausführt und in der Eingriffsposition des Hebels unmittelbar mit der Welle in Eingriff ist,
- eine Feder (22), die zwischen dem Stift und dem Hebel zusammenge-drückt ist, um auf den Hebel kontinuierlich derart einzuwirken, dass sich dieser aus der Eingriffsposition in die Löseposition bewegt,
- ein Nockenelement (24), das im Stande ist, von einer Eingriffsposition, in der es auf den Hebel durch Halten in der Eingriffsposition einwirkt, in eine Löseposition, in der es den Hebel nicht hält, und dieser daher sich frei in die Löseposition bewegen kann, bewegt zu werden, wobei die erste Auslösevorrichtung mit dem Nockenelement verbunden ist.

8. Einheit gemäß irgend einem der vorangehenden Ansprüche, wobei die Träg-heitsauslösevorrichtung folgendes umfasst:
- einen Kipphebel (50), der pendeln kann,
- eine erste Auslösewelle (52), die durch den pendelnden Kipphebel, der mit der Sperrvorrichtung in Eingriff ist, beeinflusst wird, um sie in der Offenstellung zu halten, und der von dieser durch die Wirkung des Kipphebels lösbar ist.

9. Einheit gemäß irgend einem der vorangehenden Ansprüche, wobei die fern-gesteuerte Auslösevorrichtung folgendes umfasst:
- eine Betätigungsvorrichtung (60), die aufgrund eines Empfangs eines elektrischen Signals oder eines Funksignals bewegbar ist,
- eine zweite Auslösewelle (62), die durch die Betätigungsvorrichtung beeinflusst werden kann und die mit der Sperrvorrichtung derart in Eingriff ist, dass sie sie in der Offenstellung hält.

10. Einheit gemäß irgend einem der vorangehenden Ansprüche, wobei die Druckschalterauslösevorrichtung folgendes umfasst:
- eine flexible Membrane (70), die eine Druckkammer (72) innerhalb des Körpers bildet und mit der Einlassleitung und der Auslassleitung in Verbindung zur Durchleitung eines Fluids steht,
- eine dritte Auslösewelle (74), die mit der Membrane verbunden ist, wel-che mit der Sperrvorrichtung in Eingriff ist, um sie in der Offenstellung zu halten.

## Revendications

1. Unité de coupure (1) qui peut être reliée à un tuyau d'entrée (4) et à un tuyau de sortie (6) d'une conduite de distribution d'un fluide, comprenant :
- un dispositif d'obturation (2) pouvant passer d'une configuration ouverte, dans laquelle le passage de fluide du tuyau d'entrée au tuyau de sortie est autorisé, à une configuration fermée, dans laquelle ledit passage est empêché : comprenant des activateurs pouvant actionner ladite configuration fermée et des moyens de retenue pouvant maintenir ladite configuration ouverte ;
- un premier dispositif de déclenchement (30) pouvant agir sur ledit dispositif d'obturation pour le faire passer de la configuration ouverte à la configuration fermée, ledit premier dispositif de déclenchement étant choisi dans un groupe comprenant des disposi-tifs à activation par inertie, commandés à distance par un capteur relié à un accéléro-mètre, et à actionnement par pressostat ;
- un second dispositif de déclenchement (40) pouvant agir sur ledit dispositif d'obturation pour le faire passer de la configuration ouverte à la configuration fermée, ledit second dispositif de déclenchement, différent du premier dispositif, étant choisi dans le groupe comprenant des dispositifs à activation par inertie, commandés à distance par un capteur relié à un accéléromètre, et à actionnement par pressostat ;
dans laquelle lesdits moyens de retenue comprennent
- un corps de support (16) ;
- un levier (18) ; et
dans laquelle le premier dispositif de déclen-chement peut venir en prise avec le levier (18) et le second dispositif de déclenchement peut venir en prise avec le corps de support (16), pour désactiver les moyens de retenue.

2. Unité selon la revendication 1, dans laquelle le dispositif d'obturation comprend un corps principal (2a), lesdits premier et second disposi-tifs de déclenchement étant montés sur ledit corps.

3. Unité selon la revendication 2, dans laquelle
- le dispositif d'obturation comprend un arbre (8) pouvant passer d'une position fermée, dans laquelle le dispositif d'obturation se trouve dans la configuration fermée, à une position ouverte, dans laquelle le dispositif d'obturation se trouve dans la configuration ouverte ; et
- les premier et second dispositifs de déclen-chement peuvent coopérer avec ledit arbre de manière à permettre le passage de la configu-ration ouverte à la configuration fermée.

4. Unité selon la revendication 3, comprenant
- lesdits activateurs pouvant agir sur l'arbre pour le déplacer de la position ouverte à la position fermée ;
- lesdits moyens de retenue qui peuvent maintenir l'arbre dans la position ouverte, à la différence desdits activateurs ;
dans laquelle lesdits premier et second disposi-tifs de déclenchement peuvent coopérer avec lesdits moyens de retenue.

5. Unité selon la revendication 4, dans laquelle les activateurs comprennent un élément élastique (14).

6. Unité selon la revendication 4 ou 5, dans laquelle lesdits moyens de retenue comprennent
- le corps de support (16), mobile en déplacement ;
- le levier (18), s'articulant au corps de sup-port, pouvant tourner depuis une position en prise, dans laquelle il est en prise avec l'arbre de manière à le retenir, à une position de dégagement, dans laquelle il ne retient pas l'arbre.

7. Unité selon la revendication 6, dans laquelle les moyens de retenue comprennent, en plus :
- une goupille (20), mobile en déplacement dans le levier, en prise directe avec l'arbre dans la position en prise du levier ;
- un ressort (22), comprimé entre la goupille et le levier, pouvant influer constamment sur le levier de manière à le déplacer de la position en prise à la position de dégagement ;
- un élément de came (24), pouvant passer d'une position en prise, dans laquelle il influe sur le levier en le maintenant dans la position en prise, à une position de dégagement, dans laquelle il ne maintient pas le levier, ainsi libre de se déplacer dans la position de dégagement ;
dans laquelle le premier dispositif de déclenche-ment est relié à l'élément de came.

8. Unité selon l'une quelconque des revendica-tions précédentes, dans laquelle le dispositif de déclenchement par inertie comprend :
- un culbuteur (50) pouvant osciller ;
- un premier arbre de déclenchement (52), pouvant être influencé par le culbuteur oscillant, en prise avec le dispositif d'obturation pour le maintenir dans la configuration ouverte et qui peut en être dégagé par l'action du culbuteur.

9. Unité selon l'une quelconque des revendica-tions précédentes, dans laquelle le dispositif de déclenchement commandé à distance comprend :
- un actionneur (60) se déplaçant à réception d'un signal radio ou électrique ;
- un deuxième arbre de déclenchement (62), qui peut être influencé par l'actionneur, en prise avec le dispositif d'obturation de manière à le maintenir dans la configuration ouverte.

10. Unité selon l'une quelconque des revendica-tions précédentes, dans laquelle le dispositif de déclenchement à pressostat comprend
- une membrane flexible (70) délimitant une chambre de pression (72) à l'intérieur du corps, en communication fluidique avec les tuyaux d'entrée et de sortie ;
- un troisième arbre de déclenchement (74), relié à la membrane, en prise avec le dispo-sitif d'obturation pour le maintenant dans la configuration ouverte.
